# EUROPÄISCHE PATENTSCHRIFT

(11) **EP 0 982 339 B1**
(45) Veröffentlichungstag und Bekanntmachung des Hinweises auf die Patenterteilung: **03.03.2004**
(21) Anmeldenummer: 99116327.0
(22) Anmeldetag: 19.08.1999
(51) Int. Cl.: C08G 63/21, C08L 67/07, C08F 299/04, C09D 167/07

(54) **Strahlenhärtbare wasserlösliche Polyesterharz-Zusammensetzungen mit hohem Feststoffanteil**
Radiation-curable and water-soluble polyester resin compositions with high solid content
Compositions de résine polyester durcissables par radiations, solubles dans l' eau et à haute teneur en matières solides

(30) Priorität: 27.08.1998 AT 145598
(43) Veröffentlichungstag der Anmeldung: 01.03.2000
(73) Patentinhaber: Surface Specialties Austria GmbH, 8402 Werndorf (AT)
(72) Erfinder: Urbano, Edmund, Dr., 8044 Graz (AT); Kuttler, Ulrike, Dr., 8302 Vasoldsberg (AT); Gerlitz, Martin, Dr., 8055 Graz (AT); Awad, Rami-Raimund, Dr., 8042 Graz (AT)
(74) Vertreter: Deckers, Hellmuth, Dr.

(56) Entgegenhaltungen:
- EP-A- 0 574 775
- EP-A- 0 584 734
- EP-A- 0 877 067

## Beschreibung

Die vorliegende Erfindung betrifft strahlenhärtbare wasserlösliche Polyesterharz-Zusammensetzungen mit hohem Festkörper-Massenanteil.

Aus der EP-A 0 574 775 sind selbstemulgierende polymerisierbare Bindemittel bekannt, die durch Umsetzung von (Meth)Acryloylgruppen-haltigen Präpolymeren (A) und ungesättigten wasseremulgierbaren Polyestern (B) mit mehrfunktionellen Isocyanaten zugänglich sind. Die (Meth)Acryloylgruppen-haltigen Präpolymeren (A) sind bevorzugt Polyester-(Meth)Acrylate, die Kondensationsprodukte sind von aliphatischen und/oder aromatischen Dicarbonsäuren (A1), besonders Malon-, Bernstein-, Glutar-, Adipin-, Sebacin-, Hexahydrophthal-, Terephthal-, Malein-, Fumar-, Citracon- und Itaconsäure, bzw. deren Anhydriden, Polyolen (A2), besonders Glykol, Propan-(1,2) und -(1,3)-diol, Diglykol, Dipropylenglykol, Butandiol etc., und α,β-ungesättigten Monocarbonsäure-Derivaten (A3). Die wasseremulgierbaren Polyester sind Kondensationsprodukte der als (A1) genannten Dicarbonsäuren und der genannten Polyole (A2) sowie eines Polyätheralkohols wie Polyäthylen- und Polypropylenglykol und Allyläther-funktionelle Alkohole. Mit diesen Polyestern lassen sich Dispersionen mit einem Festkörper-Massenanteil von ca. 50 % herstellen.

Aus der EP-A 0 425 947 sind wasserlösliche Bindemittel mit wenigstens einer polymerisierbaren Doppelbindung bekannt, herstellbar durch Kondensation von wenigstens einem Polyoxyalkylenglykol mit einer molaren Masse von 300 bis 800 g/mol, gegebenenfalls einem Polyoxyalkylenglykol mit einer molaren Masse kleiner als 300 g/mol, wenigstens einem alkoxylierten dreiwertigen Alkohol, gegebenenfalls wenigstens einem alkoxylierten vier- bis sechswertigen Alkohol, wenigstens einer Polycarbonsäure oder einem Derivat einer Polycarbonsäure, und wenigstens einer ungesättigten Monocarbonsäure oder eines Derivates davon.

Aus der DE-A 33 40 589 sind Acryloylgruppen-haltige wasseremulgierbare strahlenhärtbare Polyester bekannt, die cokondensierte Einheiten enthalten von einem Dicarbonsäureanhydrid, einem Polyätheralkohol, einem zweiwertigen Alkohol und einem dreiwertigen alkoxylierten Alkohols und Acrylsäure. Mit diesen Polyestern lassen sich Dispersionen mit einem Festkörper-Massenanteil von ca. 50 % herstellen.

Es wurde nun gefunden, daß eine Zusammensetzung aus einem säuregruppenhaltigen Emulgatorharz A und einem wasserunlöslichen strahlenhärtbaren Polymer B, die entweder eine Mischung aus diesen beiden Komponenten ohne chemische Reaktion oder ein durch eine Kondensationsreaktion aus diesen beiden Komponenten herstellbares Reaktionsprodukt ist, sich in Wasser bis zu einem Festkörper-Massenanteil von 75 % homogen lösen bzw. dispergieren läßt und daß die damit herstellbaren Beschichtungen sich durch Bestrahlung mit energiereicher Strahlung (UV-Licht oder Elektronenstrahlen) zu gegen mechanische und chemische Einwirkungen resistenten Überzügen härten lassen.

Gegenstand der Erfindung ist daher eine durch Strahlung härtbare Polyester-Zusammensetzung AB, die in Wasser zu Lösungen oder Dispersionen mit hohem Feststoffgehalt löslich oder dispergierbar ist, hergestellt durch Mischung oder Präkondensation eines wasserlöslichen, strahlenhärtbaren, Ester- und Säuregruppen enthaltenden Emulgatorharzes A mit einer Säurezahl von 20 bis 300, bevorzugt von 60 bis 250 mg/g und eines wasserunlöslichen, strahlenhärtbaren, Ester- und/oder Äthergruppen enthaltenden Polymeren **B**, wobei das Harz **A** ein Umsetzungsprodukt ist von einem alkoxylierten Polyol **A1** mit mindestens 3 Hydroxylgruppen pro Molekül und 3 bis 10 Oxyalkylen-Einheiten pro Molekül, und diese Oxyalkyleneinheiten jeweils 2 bis 4 Kohlenstoffatome enthalten, mit einer α,β-ungesättigten Carbonsäure **A2** mit jeweils einer freien Carboxylgruppe pro Molekül und einer Carbonsäure **A3**, ausgewählt aus Carbonsäuren **A31** mit mindestens zwei Carboxylgruppen, wobei unter diesen mindestens eine sekundäre oder tertiäre Carboxylgruppe ist (d. i. eine Carboxylgruppe, die an ein Kohlenstoffatom gebunden ist, das an zwei bzw. drei weitere Kohlenstoffatome gebunden ist) sowie einer weiteren Säuregruppe ausgewählt aus Carbonsäuregruppen, Sulfon- und Phosphonsäuregruppen, und Carbonsäuren **A32** mit mindestens zwei Carboxylgruppen und mindestens einer durch benachbarte elektronegative Substituenten aciden Hydroxylgruppe (mit einem pKa-Wert von maximal 8), und das Polymer B ein Umsetzungsprodukt ist von aliphatischen, linearen, verzweigten oder cyclischen Alkoholen **B1** mit Verbindungen **B2** ausgewählt aus Alkylenoxiden **B21** mit 2 bis 4 Kohlenstoffatomen, aliphatischen linearen, verzweigten oder cyclischen Dicarbonsäuren **B22** mit 3 bis 8 Kohlenstoffatomen und aliphatischen Lactonen **B23** mit 4 bis 12 Kohlenstoffatomen sowie Verbindungen **B3** ausgewählt aus α,β-ungesättigten Carbonsäuren mit 1 bis 2 Carboxylgruppen im Molekül.

Unter "hohem Feststoffgehalt" wird hier ein Festkörper-Massenanteil von über 55 %, bevorzugt über 65 %, besonders bevorzugt von über 70 % verstanden.

Die alkoxylierten Polyole **A1** sind auf bekannte Weise hergestellte Umsetzungsprodukte aus Alkylenoxiden **A11** und aliphatischen, linearen, verzweigten oder cyclischen Verbindungen **A12** mit mindestens drei Hydroxylgruppen pro Molekül.

Die Alkylenoxide **A11** sind aliphatische 1,2-Epoxide, ausgewählt aus Äthylenoxid (Oxiran), 1,2-Propylenoxid (Methyloxiran) und 1,2-Butylenoxid (Äthyloxiran). Besonders bevorzugt ist Oxiran.

Die aliphatischen Polyole **A12** haben mindestens drei Kohlenstoffatome und mindestens drei, bevorzugt 3 bis 6 Hydroxylgruppen pro Molekül. Beispiele sind Glycerin, Trimethyloläthan, Trimethylolpropan, Erythrit, Pentaerythrit, Arabit, Xylit und Adonit, Sorbit, Mannit und Dulcit sowie die Äther-Polyole wie Ditrimethylolpropan und Dipentaerythrit. Besonders bevorzugt werden Glycerin, Trimethyloläthan und -propan sowie Pentaerythrit. Es können auch Mischungen der genannten Polyole eingesetzt werden.

Als α,β-ungesättigte Carbonsäuren **A2** sind beispielsweise geeignet aliphatische Monocarbonsäuren wie Acryl- und Methacrylsäure, sowie Croton-, Isocroton- und Vinylessigsäure, weiter die Monoester von α,β-ungesättigten Dicarbonsäuren und aliphatischen Alkoholen mit 1 bis 8, bevorzugt 1 bis 4 Kohlenstoffatomen. Unter den letzteren seien Monomethylmaleinat und -fumarat sowie die Monomethyl-, Monoäthyl- und Monobutylester von Itacon-, Citracon und Mesaconsäure genannt. Besonders bevorzugt werden Acryl- und Methacrylsäure sowie Monomethylmaleinat. Es können auch Mischungen der genannten Säuren eingesetzt werden.

Die für die Erfindung einsetzbaren Carbonsäuren **A3** haben jeweils mindestens zwei Carboxylgruppen und eine weitere saure Gruppe pro Molekül. Dabei sind die Säuregruppen von unterschiedlicher Reaktivität, beispielsweise über den pKₐ-Wert charakterisiert. Bevorzugt weisen sie zusätzlich mindestens eine acide Hydroxylgruppe (**A32**) oder eine weitere Säuregruppe (**A31**) pro Molekül auf. Sie haben vorzugsweise mindestens 3 Kohlenstoffatome und können aliphatisch, mit linearer, verzweigter oder cyclischer Struktur, oder aromatisch sowie auch gemischt aromatisch-aliphatisch sein. Geeignet sind unter den Hydroxycarbonsäuren **A32** Tartronsäure (Hydroxymalonsäure), Äpfelsäure (Hydroxybernsteinsäure), die isomeren Weinsäuren (Dihydroxybernsteinsäuren) sowie die Citronensäure und die Isocitronensäure. Unter den Säuren **A32** mit Säuregruppen unterschiedlicher Reaktivität sind die Tricarballylsäure und die Sulfoisophthalsäure zu nennen.

Zur Synthese des wasserunlöslichen strahlenhärtbaren Polymers **B** werden in der ersten Stufe aliphatische lineare, verzweigte oder cyclische Alkohole **B1** mit mindestens zwei Hydroxylgruppen pro Molekül eingesetzt. Diese Alkohole werden bevorzugt ausgewählt aus Dihydroxyverbindungen mit zwei bis sechs Kohlenstoffatomen wie Äthylenglykol, 1,2- und 1,3-Propylenglykol, 1,4-Butandiol, 1,6-Hexandiol, Diäthylenglykol, Triäthylenglykol und Neopentylglykol. Bevorzugt werden weiter Hydroxyverbindungen mit drei oder mehr Hydroxylgruppen (wie die nachstehend genannten) und Mischungen von Hydroxyverbindungen mit einer mittleren Hydroxyl-Funktionalität von 2,1 bis 3,5. Solche Mischungen bestehen beispielsweise aus Äthylenglykol, Di- und Triäthylenglykol mit dreiwertigen Alkoholen wie Glycerin, Trimethyloläthan und -propan, oder vier- und mehrwertigen Alkoholen wie Erythrit, Pentaerythrit, Mannit, Ditrimethylolpropan, Dipentaerythrit und Sorbit.

Die Alkohole **B1** werden in der ersten Stufe mit Verbindungen **B2** ausgewählt aus Alkylenoxiden **B21**, Dicarbonsäuren **B22** und Lactonen **B23** umgesetzt. Dabei werden Polyäthyer-Polyole oder Polyester-Polyole gebildet.

Die Alkylenoxide B21 sind Oxirane, deren Kohlenstoffatome gegebenenfalls Substituenten tragen. Diese Substituenten sind ausgewählt aus Alkyl- und Alkoxygruppen mit 1 bis 8 Kohlenstoffatomen, wobei die Alkylgruppen linear, verzweigt oder cyclisch sein können. Die Substituenten können auch einen Ring bilden, wie beispielsweise bei dem Epoxid abgeleitet vom Cyclohexen oder Cycloocten. Bevorzugt werden 1,2-Epoxide von Alkenen mit einer endständigen Doppelbindung, insbesondere das Oxiran (Äthylenoxid) Methyloxiran (Propylenoxid) und das Äthyloxiran (1,2-Epoxybutan). Bei der Umsetzung von Polyolen **B1** mit Oxiranen **B21** entstehen Polyätherpolyole. Zur Begrenzung der Funktionalität der Polyätherpolyole können in diesem Schritt auch Monocarbonsäuren B24, bevorzugt aromatische Monocarbonsäuren wie z. B. Benzoesäure eingesetzt werden.

Setzt man die Polyole **B1** oder auch die aus den Polyolen **B1** und den Oxiranen **B21** gebildeten Polyätherpolyole mit Polycarbonsäuren, bevorzugt Dicarbonsäuren, **B22** um, so gelangt man zu Polyester-Polyolen. Es ist auch möglich, die Polyole **B1** und die aus **B1** und **B21** gebildeten Polyätherpolyole in Mischung mit der Carbonsäurekomponente **B22** umzusetzen. Für die Erfindung ist es erforderlich, daß die Komponente **B** in einem Molekül im Mittel mindestens eine ungesättigte Gruppe aufweist, daher muß die Stoffmenge der Carbonsäurekomponenten **B22** so gewählt werden, daß das Umsetzungsprodukt aus Polyol und Carbonsäurekomponente jeweils noch mindestens eine Hydroxylgruppe pro Molekül aufweist. Als Carbonsäuren **B22** werden aliphatische und aromatische Polycarbonsäuren eingesetzt. Bevorzugt sind lineare und cyclische aliphatische Dicarbonsäuren wie Glutarsäure, Adipinsäure, o-, m- und p-Hexahydrophthalsäure, Dodecandisäure und aromatische Dicarbonsäuren wie Iso- und Terephthalsäure, Diphenylsulfondicarbonsäure und Diphenyl(äther)-dicarbonsäure. Eine weitere Möglichkeit ist die Umsetzung der Polyole **B1** mit Lactonen **B23** unter Ringöffnung. Dabei entstehen wiederum Polyole mit gleicher Anzahl von Hydroxylgruppen wie das Ausgangspolyol. Geeignete Lactone sind die inneren Ester von aliphatischen Hydroxycarbonsäuren mit 4 bis 12 Kohlenstoffatomen, wie γ-Butyrolacton, δ-Valerolacton, ε-Caprolacton und das Lacton der 12-Hydroxylaurinsäure. Zur Begrenzung der Funktionalität der Polyesterpolyole können auch in diesem Schritt Monocarbonsäuren **B24**, bevorzugt aromatische Monocarbonsäuren wie z. B. Benzoesäure eingesetzt werden.

Die Polyäther- bzw. Polyester-Polyole werden in einem zweiten Schritt, bevorzugt in Gegenwart von Polymerisationsinhibitoren wie z. B. Hydrochinon oder 2,6-Di-tert.butyl-4-methylphenol (BHT), mit einer α,β-ungesättigten Mono- oder Dicarbonsäure **B3** umgesetzt zu den wasserunlöslichen ungesättigten Polyestern **B.**

Geeignete Komponenten B3 sind insbesondere die olefinisch ungesättigten aliphatischen Monocarbonsäuren Acrylsäure, Methacrylsäure, Vinylessigsäure, Croton- und Isocrotonsäure, die ungesättigten Dicarbonsäuren Malein-, Fumar-, Itacon-, Citracon- und Mesaconsäure sowie Halbester von diesen Säuren mit aliphatischen Alkoholen mit insbesondere 1 bis 4 Kohlenstoffatomen, wie Methanol, Äthanol, n- und iso-Propanol, n-, iso-, sek.- und tert.-Butanol. Besonders bevorzugt werden Acryl- und Methacrylsäure sowie die Monomethyl- und Monobutylester der Maleinsäure.

Die erfindungsgemäß hergestellten Polyester-Zusammensetzungen werden durch Zugabe von wäßrigen Alkalien, wäßriger Ammoniaklösung oder Aminen mindestens teilweise neutralisiert, bevorzugt zu mindestens 30 %, insbesondere zu mehr als 50 %. Anschließend lassen sie sich durch Zusatz von entionisiertem oder destilliertem Wasser in bekannter Weise in Lösungen oder Dispersionen überführen. Während die aus dem Stand der Technik bekannten strahlenhärtbaren Polyester-Zusammensetzungen nur zu wäßrigen Lösungen bzw. Dispersionen mit Feststoff-Massenanteilen von bis zu 50, maximal bis zu ca. 70 % verarbeitbar sind, lassen sich mit den Polyester-Zusammensetzungen der vorliegenden Erfindung deutlich höhere Festkörper-Massenanteile bis ca. 75 % und sogar darüber erreichen, die auch bei Lagerung stabil bleiben.

Die damit herstellbaren wäßrigen strahlenhärtbaren Lacke sind insbesondere für die Beschichtung von wärmeempfindlichen Substraten geeignet, wie Kunststoffen, Papier, Pappe, Geweben und Vliesen, Leder und Holz. Bei der Formulierung der Lacke können die üblichen Hilfsmittel, wie Pigmente, Verlaufsmittel, Netzmittel eingesetzt werden. Besonders geeignet ist die Polyester-Zusammensetzung der vorliegenden Erfindung jedoch für die Herstellung von Klarlacken.

Nach dem Auftragen auf das Substrat wird der Lack durch Bestrahlung mit energiereicher Strahlung, insbesondere mit UV-Licht, gehärtet.

Die gehärtete Lackschicht ist elastisch sowie beständig gegen mechanische Einwirkung und die Einwirkung von Chemikalien. Mit Klarlacken hergestellte Beschichtungen zeigen ausgezeichnete Transparenz und hohen Glanz. Die vorteilhaften Eigenschaften bleiben auch nach Bewitterung (Bestrahlung, Einwirkung von Feuchtigkeit, Temperaturzyklen) erhalten.

Die Erfindung wird in den folgenden Beispielen näher erläutert.

In den nachfolgenden Beispielen bedeuten ebenso wie im vorhergehenden Text alle Angaben mit der Einheit "%", Massenanteile, soweit nicht anders angegeben. "Teile" sind stets Massenteile. Konzentrationsangaben in "%" sind Massenanteile des gelösten Stoffes in der Lösung.

Die Säurezahl ist gemäß DIN 53 402 definiert als der Quotient derjenigen Masse ***m***_{KOH} an Kaliumhydroxid, die erforderlich ist, um eine zu untersuchende Probe zu neutralisieren, und der Masse ***m***_{B} dieser Probe (Masse des Feststoffes in der Probe bei Lösungen oder Dispersionen); ihre übliche Einheit ist "mg/g".

Die Hydroxylzahl ist gemäß DIN 53 240 definiert als der Quotient derjenigen Masse ***m***_{KOH} an Kaliumhydroxid, die genausoviel Hydroxylgruppen aufweist wie eine zu untersuchende Probe, und der Masse ***m***_{B} dieser Probe (Masse des Feststoffes in der Probe bei Lösungen oder Dispersionen); ihre übliche Einheit ist "mg/g".

### Beispiele

### Komponente A (Emulgatorharz = wasserlösliches Polyesteracrylat)

### Beispiel A1

356 g Pentaerythrit, alkoxyliert mit 5 mol Äthylenoxid pro 1 mol Pentaerythrit ("Penta 5 EO") wurden mit 216 g Acrylsäure in Gegenwart von 0,5 g p-Toluolsulfonsäure und 1 g Hydrochinon durch Azeotropdestillation bei ca. 130 °C mit Toluol als Schleppmittel bis zu einer Säurezahl unter 5 mg/g verestert. Anschließend wurden 96 g Citronensäure zugegeben, bis zu einer Säurezahl von 95 mg/g weiterverestert und das Kreislaufmittel unter vermindertem Druck abdestilliert. Es wurden 590 g Emulgatorharz A1 erhalten.

### Beispiel A2

Beispiel A1 wurde mit 192 g Citronensäure wiederholt. Es wurden 688 g eines Emulgatorharzes A2 mit einer Säurezahl von 165 mg/g erhalten.

### Beispiel A3

Im Beispiel A1 wurde die Citronensäure durch 87 g Aconitsäure ersetzt, ansonsten wurde gleich verfahren. Es wurden 585 g eines Produktes A3 mit einer Säurezahl von 97 mg/g erhalten.

### Komponente B (wasserunlösliches Polyesteracrylat)

### Beispiel B1

266 g Trimethylolpropan, alkoxyliert mit 3 Mol Äthylenoxid pro Mol Trimethylolpropan, 37 g Benzoesäure und 187 g Acrylsäure wurden in Gegenwart von 0,4 g p-Toluolsulfonsäure und 1 g Hydrochinon durch Azeotropdestillation bei ca. 130 °C mit Toluol als Schleppmittel bis zu einer Säurezahl unter 5 mg/g verestert und das Schleppmittel sowie nicht umgesetzte Acrylsäure durch Destillation unter vermindertem Druck entfernt. Es wurden 438 g wasserunlösliches Polyesteracrylat mit einer Hydroxylzahl unter 20 mg/g erhalten.

### Beispiel B2

Analog zu Beispiel B1 wurden 250 g Ditrimethylolpropan, 73 g Adipinsäure und 144 g Acrylsäure verestert. Es wurden 413 g eines wasserunlöslichen Polyesteracrylats mit einer Säurezahl unter 5 mg/g und einer Hydroxylzahl von 140 mg/g erhalten.

### Beispiel B3

An 134 g Trimethylolpropan wurden bei 145 °C 342 g Caprolacton angelagert und das erhaltene Produkt mit 216 g Acrylsäure bis zu einer Säurezahl unter 5 mg/g verestert. Es wurden 635 g Polyesteracrylat mit einer Hydroxylzahl unter 20 mg/g erhalten.

### Beispiele für die Kombinationen A + B:

### Beispiel C1

60 Teile Emulgatorharz A1 wurden mit 40 Teilen wasserunlöslichem Polyesteracrylat B1 bei 50 °C gemischt, 75 % der Säuregruppen (Säurezahl in der Mischung: 58 mg/g) durch Zugabe von wäßrigem Ammoniak neutralisiert, und schließlich mit destilliertem Wasser auf einem Festkörper-Massenanteil von 75 % verdünnt. Es wurde eine opake Lösung mit einer dynamischen Viskosität von 3500 mPa·s und einem pH-Wert von 7,8 erhalten.

### Beispiel C2

50 Teile Emulgatorharz A3 wurden mit 50 Teilen Polyesteracrylat B3 bei 50 °C gemischt, 90 % der Säuregruppen (Säurezahl in der Mischung: 48 mg/g) wurden mit wäßrigem Ammoniak neutralisiert. Nach Verdünnung mit destilliertem Wasser auf einen Festkörper-Massenanteil von 75 % wurde eine opake Lösung mit einer dynamischen Viskosität von 2500 mPa·s und einem pH-Wert von 7,7 erhalten.

### Beispiel C3

692 g Emulgatorharz A2 wurden mit 413 g Polyesteracrylat B2 auf 140 °C erhitzt und bei dieser Temperatur gehalten, bis die Säurezahl auf 50 mg/g gesunken war. Nach der Neutralisation von 85 % der Säuregruppen mit wäßrigem Ammoniak und Verdünnung mit destilliertem Wasser auf einen Festkörper-Massenanteil von 75 % wurde eine klare Lösung mit einer dynamischen Viskosität von 4500 mPa·s und einem pH-Wert von 8,0 erhalten.

Zu den Bindemitteln der Beispiele C1 bis C3 in der eingestellten Konzentration wurde ein handelsüblicher Photoinitiator (2-Hydroxy-2-methyl-1-phenylpropan-1-on, in einem Massenanteil von 2 %, bezogen auf den Feststoff der Bindemittel-Lösung) zugesetzt, die Mischung wurde auf Holz appliziert (10 - 15 g/m²) und durch zwei Quecksilberlampen mit einer Leistung von je 80 Watt bei einer Bandgeschwindigkeit von 10 bis 20 Meter pro Minute gehärtet. Es wurde kein "Aufstellen" der Holzfasern (rauhe Oberfläche durch ungleichmäßige Anqueliung) beobachtet.

Nach Trocknung und Härtung zeigte sich eine transparente, elastische und kratz- sowie chemikalienbeständige Beschichtung. Auch nach Bestrahlung mit UV-Licht (Testmethode gemäß ASTM D 4587) zeigt sich nach 500 h Bestrahlung keine Veränderung des Films.

### Vergleichsbeispiele

### Beispiel V1

Gemäß den Beispielen 1 und 3 der EP-A 0 574 775 wurden ein Polyester-Acrylat (®Laromer LR 8799) (V1-1) und ein Polyätheracrylat (®Laromer LR 8812) (V1-2) jeweils mit einem Emulgator-Polyester B1 vermischt, auf 70 °C aufgeheizt und jeweils mit Hexamethylen-Diisocyanat versetzt, bis im IR-Spektrum kein Isocyanat mehr nachzuweisen war. Die erhaltene Addukte V1-1 und V1-2 wurden mit Hilfe eines Dispergiergerätes in entionisiertem Wasser dispergiert zu Dispersionen mit einem Feststoff-Massengehalt von ca. 50 %. Nach Zusatz eines Photoinitiators (2-Hydroxy-2-methyl-1-phenylpropan-1-on, in einem Massenanteil von 2 %, bezogen auf den Feststoff der Bindemittel-Lösung) wurden die Mischungen auf Holz appliziert (10 - 15 g/m²) und durch zwei Quecksilberlampen mit einer Leistung von je 80 Watt bei einer Bandgeschwindigkeit von 10 bis 20 Meter pro Minute gehärtet.

### Beispiel V2

Gemäß der DE-A 33 40 589, Beispiel 3 wurde ein Polyesteracrylat aus 1 mol Maleinsäureanhydrid, 0,05 mol eines Polyäthylenglykols mit einer mittleren molaren Masse von 1500 g/mol, 0,45 mol 1,2-Propandiol, 1 mol eines (mit durchschnittlich 4 mol Äthylenoxid pro 1 mol Trimethylolpropan) äthoxylierten Trimethylolpropans und 1,8 mol Acrylsäure in toluolischer Lösung unter Zusatz von Toluolsulfonsäure als Katalysator synthetisiert. Das Lösungsmittel wurde anschließend unter vermindertem Druck abgezogen. Das Polyesteracrylat hatte eine Säurezahl von ca. 14 mg/g. 250 g dieses Polyesteracrylates wurden mit einem Photoinitiator (2-Hydroxy-2-methyl-1-phenylpropan-1-on, in einem Massenanteil von 2 %, bezogen auf den Feststoff der Bindemittel-Lösung) versetzt und mit entionisiertem Wasser zu einer Dispersion mit einem Festkörper-Massenanteil von ca. 50 % dispergiert. Die Mischung wurde anschließend auf Holz appliziert (10- 15 g/m²) und durch zwei Quecksilberlampen mit einer Leistung von je 80 Watt bei einer Bandgeschwindigkeit von 10 bis 20 Meter pro Minute gehärtet.

Bei allen Vergleichsbeispielen (V1-1, V1-2, V2) stellen sich die Holzfasern an der Oberfläche auf; dies bewirkt eine rauhe Oberfläche. Nach künstlicher Bewitterung (Bestrahlung mit UV-Licht, 500 h) sind die Lackfilme kratzempfindlich.

## Patentansprüche

1. Durch Strahlung härtbare Polyester-Zusammensetzung **AB**, die in Wasser zu Lösungen oder Dispersionen mit hohem Feststoffgehalt löslich oder dispergierbar ist, herstellbar durch Mischung oder Präkondensation eines wasserlöslichen, strahlenhärtbaren, Ester- und Säuregruppen enthaltenden Emulgatorharzes A mit einer Säurezahl von 20 bis 300 mg/g und eines wasserunlöslichen, strahlenhärtbaren, Esterund/oder Äthergruppen enthaltenden Polymeren **B**, wobei das Harz **A** ein Umsetzungsprodukt ist von einem alkoxylierten Polyol **A1** mit mindestens 3 Hydroxylgruppen pro Molekül und 3 bis 10 Oxyalkylen-Einheiten pro Molekül, und diese Oxyalkyleneinheiten jeweils 2 bis 4 Kohlenstoffatome enthalten, mit einer α,β-ungesättigten Carbonsäure **A2** mit jeweils einer freien Carboxylgruppe pro Molekül und einer Carbonsäure **A3**, ausgewählt aus Carbonsäuren **A31** mit mindestens zwei Carboxylgruppen, wobei unter diesen mindestens eine sekundäre oder tertiäre Carboxylgruppe ist sowie einer weiteren Säuregruppe ausgewählt aus Carbonsäuregruppen, Sulfon- und Phosphonsäuregruppen, und Carbonsäuren **A32** mit mindestens zwei Carboxylgruppen und mindestens einer durch benachbarte elektronegative Substituenten aciden Hydroxylgruppe mit einem pKa-Wert von maximal 8, und das Polymer **B** ein Umsetzungsprodukt ist von aliphatischen, linearen, verzweigten oder cyclischen Alkoholen **B1** mit Verbindungen **B2** ausgewählt aus Alkylenoxiden **B21** mit 2 bis 4 Kohlenstoffatomen, aliphatischen linearen, verzweigten oder cyclischen Dicarbonsäuren B22 mit 3 bis 8 Kohlenstoffatomen und aliphatischen Lactonen **B23** mit 4 bis 12 Kohlenstoffatomen sowie Verbindungen **B3** ausgewählt aus α,β-ungesättigten Carbonsäuren mit 1 bis 2 Carboxylgruppen im Molekül.

2. Polyester-Zusammensetzung nach Anspruch 1, **dadurch gekennzeichnet, daß** sie durch Mischen des Emulgatorharzes A mit dem wasserunlöslichen Polymeren **B** herstellbar ist.

3. Polyester-Zusammensetzung nach Anspruch 1, **dadurch gekennzeichnet, daß** sie durch Kondensation des Emulgatorharzes A mit dem wasserunlöslichen Polymeren **B** herstellbar ist.

4. Polyester-Zusammensetzung nach Anspruch 1, **dadurch gekennzeichnet, daß** das Emulgatorharz eine Säurezahl von 60 bis 250 mg/g aufweist.

5. Polyester-Zusammensetzung nach Anspruch 1, **dadurch gekennzeichnet, daß** das Emulgatorharz **A** durch Kondensation eines alkoxylierten Polyols **A1**, einer a,β-ungesättigten Carbonsäure **A2** und einer Carbonsäure **A31** mit mindestens drei Carboxylgruppen herstellbar ist, von denen mindestens eine eine sekundäre oder tertiäre Carboxylgruppe ist.

6. Polyester-Zusammensetzung nach Anspruch 1, **dadurch gekennzeichnet, daß** das Emulgatorharz A herstellbar ist durch Kondensation eines äthoxylierten Polyols ausgewählt aus Glycerin, Trimethylolpropan und Pentaerythrit, einer α,β-ungesättigten Carbonsäure ausgewählt aus Acryl- und Methacrylsäure sowie Monomethylmaleinat und einer Carbonsäure ausgewählt aus Tartronsäure, Äpfelsäure, den Isomeren der Weinsäure, Citronensäure und Isocitronensäure sowie Tricarballylsäure und Sulfoisophthalsäure.

7. Polyester-Zusammensetzung nach Anspruch 1, **dadurch gekennzeichnet, daß** die Polyester-Komponente **B** durch eine mehrstufige Umsetzung erhältlich sind, wobei in der ersten Stufe mindestens zweiwertige aliphatischen Hydroxyverbindungen **B1** mit Verbindungen **B2** ausgewählt aus Alkylenoxiden **B21**, Dicarbonsäuren **B22** und Lactonen **B23** zu Polyäther- bzw. Polyesterpolyolen umgesetzt werden, die in der zweiten Stufe mit α,β-ungesättigten Mono- oder Di-Carbonsäuren **B3** weiterreagiert werden.

8. Wäßriger strahlenhärtbarer Lack, enthaltend eine Polyester-Zusammensetzung nach Anspruch 1.

9. Wäßriger strahlenhärtbarer Lack, enthaltend eine Polyester-Zusammensetzung nach Anspruch 1 und einen Photoinitiator.

10. Verwendung eines Lacks nach Anspruch 8 zur Lackierung von Holz.

## Claims

1. A radiation-curable polyester composition **AB** which is soluble or dispersible in water to form solutions or dispersions with a high solids content, preparable by mixing or precondensation of a water-soluble, radiation-curable emulsifier resin A containing ester groups and acid groups and having an acid number of from 20 to 300 mg/g and a water-insoluble, radiation-curable, polymer B containing ester groups and/or ether groups, the resin **A** being a reaction product of an alkoxylated polyol **A1** having at least 3 hydroxyl groups per molecule and from 3 to 10 oxyalkylene units per molecule, these oxyalkylene units each containing 2 to 4 carbon atoms, with an α,β-unsaturated carboxylic acid **A2** having in each case one free carboxyl group per molecule and a carboxylic acid **A3** selected from carboxylic acids **A31** having at least two carboxyl groups, at least one of which is a secondary or tertiary carboxyl group, and having a further acid group selected from carboxylic acid groups, sulfonic and phosphonic acid groups, and carboxylic acids **A32** having at least two carboxyl groups and at least one hydroxyl group which is acidic by virtue of adjacent electronegative substituents and has a pKa value of not more than 8, and the polymer **B** being a reaction product of aliphatic, linear, branched or cyclic alcohols **B1** with compounds **B2** selected from alkylene oxides **B21** having 2 to 4 carbon atoms, aliphatic linear, branched or cyclic dicarboxylic acids **B22** having 3 to 8 carbon atoms and aliphatic lactones **B23** having 4 to 12 carbon atoms, and also compounds **B3** selected from α,β-unsaturated carboxylic acids having 1 to 2 carboxyl groups in the molecule.

2. A polyester composition as claimed in claim 1, preparable by mixing the emulsifier resin **A** with the water-insoluble polymer **B**.

3. A polyester composition as claimed in claim 1, preparable by condensing the emulsifier resin **A** with the water-insoluble polymer **B**.

4. A polyester composition as claimed in claim 1, wherein the emulsifier resin has an acid number of from 60 to 250 mg/g.

5. A polyester composition as claimed in claim 1, wherein the emulsifier resin **A** is preparable by condensing an alkoxylated polyol **A1**, an α,β-unsaturated carboxylic acid **A2** and a carboxylic acid **A31** having at least three carboxyl groups, of which at least one is a secondary or tertiary carboxyl group.

6. A polyester composition as claimed in claim 1, wherein the emulsifier resin **A** is preparable by condensing an ethoxylated polyol selected from glycerol, trimethylolpropane and pentaerythritol, an α,β-unsaturated carboxylic acid selected from acrylic acid and methacrylic acid and also monomethyl maleate, and a carboxylic acid selected from tartronic acid, malic acid, the isomers of tartaric acid, citric acid and isocitric acid and also tricarballylic acid and sulfoisophthalic acid.

7. A polyester composition as claimed in claim 1, wherein the polyester components **B** are obtainable by a multistage reaction in which in the first stage at least divalent aliphatic hydroxy compounds **B1** are reacted with compounds **B2** selected from alkylene oxides **B21**, dicarboxylic acids **B22** and lactones **B23** to form polyether polyols or polyester polyols, respectively, which in the second stage are reacted further with α,β-unsaturated monocarboxylic or dicarboxylic acids B3.

8. An aqueous, radiation-curable coating material comprising a polyester composition as claimed in claim 1.

9. An aqueous, radiation-curable coating material comprising a polyester composition as claimed in claim 1 and a photoinitiator.

10. The use of a coating material as claimed in claim 8 for coating wood.

## Revendications

1. Composition de polyester durcissable par rayonnement **AB**, qui est soluble ou dispersible dans l'eau sous forme de solutions ou de dispersions avec une teneur élevée en solides, pouvant être préparée par mélange ou précondensation d'une résine d'émulsifiant **A**, hydrosoluble, durcissable par rayonnement, contenant des groupes ester et acide, avec un indice d'acide de 20 à 300 mg/g et d'un polymère **B** insoluble dans l'eau, durcissable par rayonnement, contenant des groupes ester et/ou éther, dans laquelle la résine **A** est un produit de réaction d'un polyol alcoxylé **A1** avec au moins 3 groupes hydroxyle par molécule et 3 à 10 motifs oxyalkylène par molécule, et ces motifs oxyalkylène contiennent respectivement de 2 à 4 atomes de carbone, avec un acide carboxylique **A2** α,β-insaturé ayant respectivement un groupe carboxyle libre par molécule et d'un acide carboxylique **A3**, choisi parmi les acides carboxyliques **A31** ayant au moins deux groupes carboxyle, dans lesquels il y a parmi ceux-ci au moins un groupe carboxyle secondaire ou tertiaire ainsi qu'un autre groupe acide choisi parmi les groupes acide carboxylique, les groupes acide sulfonique et phosphonique, et les acides carboxyliques **A32** ayant au moins deux groupes carboxyle et au moins un groupe hydroxyle rendu acide par des substituants électro-négatifs voisins avec une valeur de pKa de 8 au maximum, et le polymère B est un produit de réaction d'alcools aliphatiques, linéaires, ramifiés ou cycliques **B1** avec des composés **B2** choisis parmi les oxydes d'alkyle **B21** ayant de 2 à 4 atomes de carbone, les acides dicarboxyliques aliphatiques linéaires, ramifiés ou cycliques **B22** ayant de 3 à 8 atomes de carbone et les lactones aliphatiques **B23** ayant de 4 à 12 atomes de carbone ainsi que les composés **B3** choisis parmi les acides carboxyliques α,β-insaturés ayant 1 à 2 groupes carboxyle dans la molécule.

2. Composition de polyester selon la revendication 1, **caractérisée en ce que** l'on peut la préparer par mélange de la résine d'émulsifiant **A** avec le polymère **B** insoluble dans l'eau.

3. Composition de polyester selon la revendication 1, **caractérisée en ce que** l'on peut la préparer par condensation de la résine d'émulsifiant **A** avec le polymère **B** insoluble dans l'eau.

4. Composition de polyester selon la revendication 1, **caractérisée en ce que** la résine d'émulsifiant présente un indice d'acide de 60 à 250 mg/g.

5. Composition de polyester selon la revendication 1, **caractérisée en ce que** la résine d'émulsifiant **A** peut être préparée par condensation d'un polyol alcoxylé **A1,** d'un acide carboxylique α,β-insaturé **A2** et d'un acide carboxylique **A31** ayant au moins trois groupes carboxyle, parmi lesquels au moins un est un groupe carboxyle secondaire ou tertiaire.

6. Composition de polyester selon la revendication 1, **caractérisée en ce que** la résine d'émulsifiant **A** peut être préparée par condensation d'un polyol éthoxylé choisi parmi la glycérine, le triméthylolpropane et le pentaérythritol, d'un acide carboxylique α,β-insaturé choisie parmi l'acide acrylique et méthacrylique et le monomaléinate de méthyle et un acide carboxylique choisi parmi l'acide tartronique, l'acide malique, les isomères de l'acide tartrique, l'acide citrique et l'acide isocitrique ainsi que l'acide tricarballyle et l'acide sulfoisophtalique.

7. Composition de polyester selon la revendication 1, **caractérisée en ce qu'**on peut obtenir le composant polyester **B** par une réaction multi-étapes, dans laquelle dans la première étape on met à réagir des composés hydroxy-aliphatiques au moins difonctionnels **B1** avec des composés **B2** choisis parmi les oxydes d'alkylène **B21,** les acides dicarboxyliques **B22** et les lactones **B23** pour obtenir des polyéther- ou polyester-polyols, qui sont mis à réagir dans la deuxième étape avec des acides mono- ou di-carboxyliques **B3** α,β-insaturés.

8. Peinture aqueuse durcissable sous l'action du rayonnement, contenant une composition de polyester selon la revendication 1.

9. Peinture aqueuse durcissable sous l'action du rayonnement, contenant une composition de polyester selon la revendication 1 et un photoinitiateur.

10. Utilisation d'une peinture selon la revendication 8 pour la peinture du bois.
